# EUROPÄISCHE PATENTANMELDUNG

(11) **EP 0 990 602 A1**
(43) Veröffentlichungstag der Anmeldung: **05.04.2000**
(21) Anmeldenummer: 99115863.5
(22) Anmeldetag: 12.08.1999
(51) Int. Cl.: B65G 17/08, B65G 17/34

(54) **Schanierbandkette**

(30) Priorität: 29.09.1998 DE 29817213 U
(71) Anmelder: KRONES AG, 93068 Neutraubling (DE)
(72) Erfinder: Ternes, Klaus, 93053 Regensburg (DE)

(57) **Zusammenfassung**

Eine Scharnierbandkette (1) mit einer Vielzahl von durch Gelenkbolzen (6) verbundenen Kettengliedern, die jeweils einen aus Kunststoff bestehenden Tragkörper (2) mit an zwei gegenüberliegenden Kanten(3,3*'*) angeformten Gelenkaugen (5,4,4*'*)aufweisen, wobei der Tragkörper (2) eine metallische Lasttragfläche (10-) aufweist.

## Beschreibung

Die Erfindung betrifft eine Scharnierbandkette gemäß dem Oberbegriff des Anspruchs 1.

Scharnierbandketten werden zum Transportieren von Gefäßen (Flaschen, Dosen etc.) oder Gebinden (Flaschenkästen, Kartons, Trays etc.) in Abfüll- und Verpackungsanlagen verwendet. Die bekannten Scharnierbandketten aus Kunststoff haben den Nachteil, dass ihre mit den zu transportierenden Gegenständen in Berührung kommende Transportoberfläche einem nicht unerheblichen Verschleiß unterliegt, vor allem wenn das Material der Gegenstände (z.B. Glas) eine größere Härte als die Transportoberfläche aufweist. Ferner gibt es in größeren Transportanlagen vereinzelt auch Tunnel- oder Bühnentransporteurabschnitte, bei denen häufig aufgrund der örtlichen Gegebenheiten keine Bandschmierung einsetzbar ist, so dass hier auf Rollenförderer oder dgl. zurückgegriffen werden musste.
Der Erfindung liegt daher die Aufgabe zugrunde, eine Lösung anzugeben, die diese Probleme beseitigt.

Gelöst wird diese Aufgabe gemäß dem kennzeichnenden Teil des Anspruchs 1.

Eine metallische Lasttragfläche kann durch Beschichten der Kunststoffkettenglieder oder durch Befestigen eines Metallkörpers (Blechplatte) auf jedem Kunststoffkettenglied bereitgestellt werden. Es kann beispielsweise eine ebene Blechplatte durch Schraubverbindungen, Klebstoff oder andere Verbindungsmittel auf einem Kettenglied befestigt werden. Alternativ dazu kann auch eine formschlüssige Verbindung (Schwalbenschwanz oder dgl.) zwischen dem Metallkörper und Kettenglied gewählt werden.

Besonders vorteilhaft ist eine Ausführung, bei der der Metallkörper vor dem Spritzgießen in eine Gußform einlegbar ist und dann infolge des nachfolgenden Spritzvorganges zur Herstellung des aus Kunststoff bestehenden Tragkörpers eines Kettenglieds einen integralen Bestandteil von diesem bildet. Vor allem bei einem hohen Stückzahlbedarf ist damit eine wirtschaftliche Herstellung gegeben. Um bei dieser Methode eine besonders dauerhafte Verbindung zwischen dem Tragkörper und dem Metallkörper zu erhalten, kann die zum Tragkörper weisende Seite des Metallkörpers so gestaltet werden, dass nach dem Spritzvorgang auch ein Formschluss vorliegt.

Die erfindungsgemäße Scharnierbandkette hat nicht nur den Vorteil einer höheren Verschleißbeständigkeit, sondern sie kann im Vergleich zu Scharnierbandketten in Ganzmetallausführung ohne eine Schmierung auskommen.

Nachfolgend werden Ausführungsbeispiele der Erfindung anhand der Fig. beschrieben. Es zeigt:
- Fig. 1: einen Scharnierbandkettenabschnitt in einer Draufsicht,

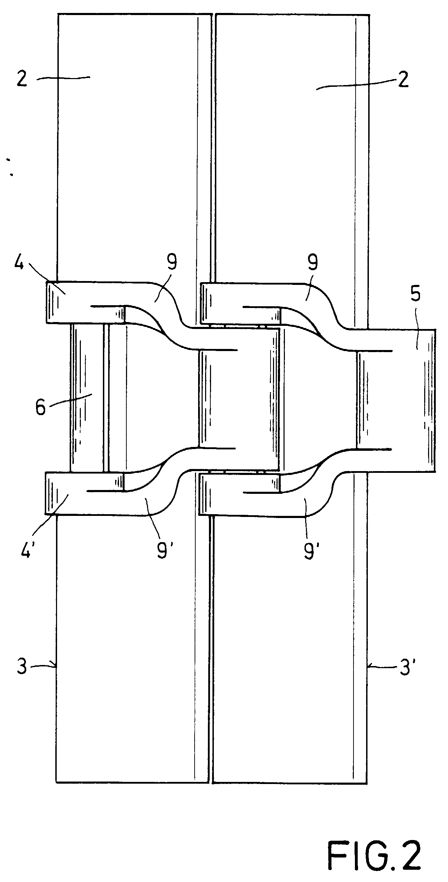

- Fig. 2: die Unterseite des Scharnierbandkettenabschnitts gemäß Fig. 1,
- Fig. 3: eine Seitenansicht eines einzelnen Kettengliedes gemäß einer ersten Ausführungsform,
- Fig. 4: eine Seitenansicht eines einzelnen Kettengliedes gemäß einer zweiten Ausführungsform und
- Fig. 5: eine Seitenansicht eines einzelnen Kettengliedes gemäß einer dritten Ausführungsform.

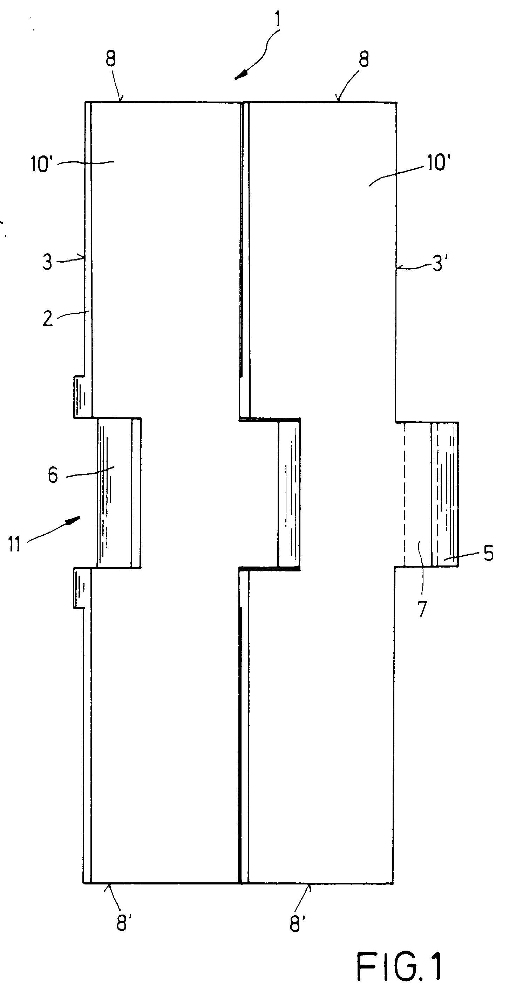

Entsprechend der Fig. 1 weist jedes der beiden abgebildeten Kettenglieder der Scharnierbandkette 1 eine Tragplatte 2 mit paarweise parallelen Seiten 3, 3', 8, 8' auf, wobei die Tragplatte 2 eine im wesentlichen rechteckige Außenkontur besitzt. Lediglich in der Mitte der Längsseite 3 weist die Tragplatte 2 einen Ausschnitt 11 auf, während an der gegenüberliegenden Längsseite 3', ebenfalls in der Mitte, ein kongruent zum Ausschnitt 11 geformter, nach außen vorspringender Ansatz vorhanden ist, der ein zentrales Gelenkauge 5 bildet und in den Ausschnitt 11 eines benachbarten Kettengliedes einführbar ist. Im genannten Ausschnitt 11 befindet sich ein metallischer Gelenkbolzen 6, der vorzugsweise aus einem magnetischen oder magnetisierbaren Werkstoff besteht. Dieser Gelenkbolzen 6 durchgreift eine Bohrung 7 im Gelenkauge 5 mit geringem Radialspiel, so dass das Gelenkauge 5 widerstandsarm um den Bolzen 6 schwenkbar ist.

An der Unterseite der Tragplatte 2 befindet sich an der den Ausschnitt 11 aufweisenden Seite 3 ein Gelenkaugenpaar, wobei ein Gelenkauge 4 an einer Seite und zweites Gelenkauge 4' an der gegenüberliegenden Seite des Ausschnitts 11 angeordnet ist. Beide Gelenkaugen 4, 4' werden vom Bolzen 6 durchgriffen und halten diesen verdrehfest. Von den beiden Gelenkaugen 4, 4' führt jeweils ein stufenförmiger Steg 9, 9' zum zentralen Gelenkauge 4, wobei die Tragplatte 2, die Gelenkaugen 4, 4', 5 und die Stege 9, 9' als ein einteiliges Spritzgußteil ausgeführt sind. Als Werkstoff sind verschleißfeste Kunststoffe, wie z.B. Polyacetal, geeignet.

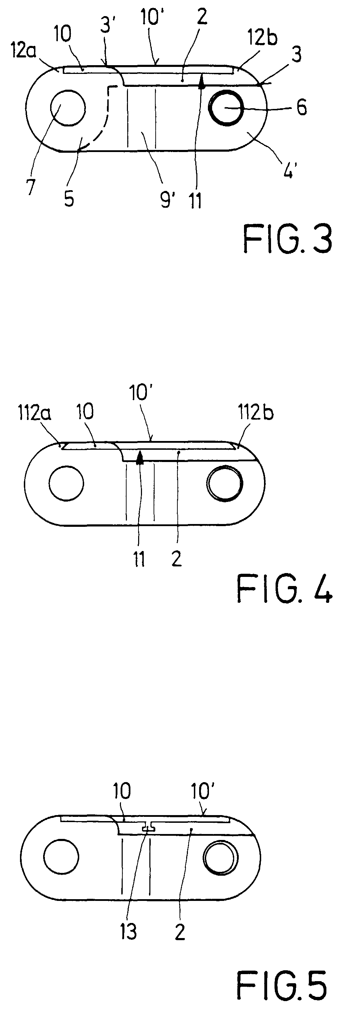

Die Besonderheit liegt nun darin, dass die Oberseite der Tragplatten 2 mit einer metallischen Oberfläche 10', d.h. Lasttragfläche, versehen ist. Entsprechend der Fig. 3 kann diese Lasttragfläche durch eine dünne Metallplatte 10 gebildet werden, die an der Tragplatte 2 befestigt ist, z.B. mit Klebstoff, Senkkopfschrauben oder anderen geeigneten Befestigungsmitteln (nicht dargestellt). Die Tragplatte 2 kann zur Aufnahme der Metallplatte 10 mit einer entsprechenden Vertiefung 11 versehen sein. In Abhängigkeit der Metallplattendicke kann die Vertiefung so gestaltet sein, dass die Lasttragfläche 10' der Metallplatte bündig mit bezüglich der Kettenlaufrichtung vor- und nachlaufenden Stegen 12a, 12b des Tragkörpers 2 verläuft.

Die genannten Stege und die zugeordneten Kanten der Metallplatte 10 können so geformt sein, dass die Metallplatte formschlüssig gehalten wird. Bei der in Fig. 4 abgebildeten Ausführung sind die Stege 112a, 112b und zugeordneten Kanten 10a, 10b so abgeschrägt, dass eine schwalbenschwanzartige Führung für die Metallplatte 10 vorliegt und diese dadurch ggf. austauschbar ist.

Es besteht aber auch die Möglichkeit, die Metallplatte 10 zu einem integralen Bestandteil eines Kettengliedes zu machen, indem sie in die Spritzgußform eingelegt und dann der flüssige Kunststoff eingespritzt wird, so dass eine innige Verbindung entsteht. Wie in Fig. 5 angedeutet, kann es bei der zuvor genannten Herstellmethode von Vorteil sein, die zum Tragkörper 2 weisende Seite der Metallplatte durch angeformte Rippen 13, Bolzen, Vertiefungen oder dgl. so auszuführen, dass nach dem Spritzgießen auch eine formschlüssige Verbindung zwischen dem Kunststoff und der Metallplatte 10 vorhanden ist.

Für die Metallplatte ist bevorzugt ein rostfreier Stahl mit hoher Härte zu verwenden.

Die Neuerung ist sowohl bei geradelaufenden als auch kurvengängigen Scharnierbandketten anwendbar.

## Patentansprüche

1. Scharnierbandkette (1) mit einer Vielzahl von durch Gelenkbolzen (6) verbundenen Kettengliedern, die jeweils einen aus Kunststoff bestehenden Tragkörper (2) mit an zwei gegenüberliegenden Kanten (3, 3') angeformten Gelenkaugen (5, 4, 4') aufweisen, dadurch gekennzeichnet, dass der Tragkörper (2) eine metallische Lasttragfläche (10') aufweist.

2. Scharnierbandkette nach Anspruch 1, dadurch gekennzeichnet, dass die metallische Lasttragfläche (10') durch einen mit dem Tragkörper (2) verbundenen Metallkörper (10) gebildet wird.

3. Scharnierbandkette nach Anspruch 1 oder 2, dadurch gekennzeichnet, dass der Tragkörper (2) als Spritzgußteil ausgebildet und an den Metallkörper (10) angespritzt ist, wobei der Metallkörper (10) einen integralen Bestandteil des Tragkörpers (2) bildet.

4. Scharnierbandkette nach wenigstens einem der Ansprüche 1 oder 2, dadurch gekennzeichnet, dass der Metallkörper (10) als eine im wesentlichen ebene Platte ausgebildet ist, die am Tragkörper (2) mechanisch oder mit einem Haftmittel befestigt ist.

5. Scharnierbandkette nach wenigstens einem der Ansprüche 1 bis 4, dadurch gekennzeichnet, dass der Tragkörper (2) und der Metallkörper (10) so zueinander komplementär ausgebildet sind, dass der Metallkörper (10) durch Formschluss am Tragkörper (2) befestigbar ist, insbesondere lösbar.

6. Scharnierbandkette nach wenigstens einem der vorhergehenden Ansprüche 1 bis 5, dadurch gekennzeichnet, dass die metallische Lasttragfläche (10') oder der Metallkörper (10) aus rostfreiem Material besteht.
